# FASCICULE DE BREVET EUROPEEN

(11) **EP 0 945 605 B1**
(45) Date de publication et mention de la délivrance du brevet: **06.07.2005**
(21) Numéro de dépôt: 99400670.8
(22) Date de dépôt: 19.03.1999
(51) Int. Cl.: F02B 23/10, F02B 17/00, F02F 1/24, F02B 3/02

(54) **Nouveau moteur à combustion interne, à allumage commandé et à injection directe de carburant**
Fremdgezündete Brennkraftmaschine mit Direkteinspritzung
Spark ignited direct injection internal combustion engine

(30) Priorité: 26.03.1998 FR 9803881
(43) Date de publication de la demande: 29.09.1999
(73) Titulaire: Institut Français du Pétrole, 92852 Rueil-Malmaison Cedex (FR)
(72) Inventeur: Monnier, Gaetan, 78955 Carrières sous Poissy (FR)

(56) Documents cités:
- EP-A- 0 824 185
- DE-C- 19 508 986
- US-A- 2 606 538
- US-A- 4 216 745
- US-A- 4 543 929
- US-A- 5 327 864

## Description

La présente invention concerne le domaine des moteurs à combustion interne à 4 temps, à allumage commandé et particulièrement à injection directe de carburant dans la chambre de combustion.

Dans ce type de moteurs, l'injection de carburant a lieu directement dans la chambre de combustion et non pas, comme dans les autres moteurs, dans le ou les conduit(s) d'admission. L'injection directe de carburant permet de mieux maîtriser la combustion dans la mesure où les injecteurs peuvent réagir et être commandés au niveau du cycle moteur.

De nombreuses conceptions de moteurs ont déjà été faites dans ce sens. Ainsi on connaît des moteurs à 4 temps et à allumage commandé ayant 4 soupapes par cylindre, une bougie placée dans la culasse sur l'axe longitudinal du cylindre ayant des conduits d'admission orientées et débouchant sensiblement parallèlement à l'axe du cylindre, et dans lesquels l'injecteur de carburant débouche juste en dessous des soupapes d'admission.

On connaît aussi des moteurs de même type mais où les conduits d'admission sont orientés de façon à produire un mouvement des gaz autour de l'axe du cylindre (mouvement dit de SWIRL) divulgués, par example, dans US 5 327 864 A.

Le piston associé à ces moteurs présente couramment un évidement de forme spécifique destiné à orienter et renforcer le mouvement des gaz dans la chambre de combustion.

On connaît encore des moteurs dont le piston présente un bol (ou évidement) sphérique disposé, au point mort haut, juste en face de l'injecteur de carburant et de la bougie d'allumage.

Tous ces moteurs présentent de grosses cylindrées (alésages plutôt supérieurs à 80 mm) et ont tous au moins quatre soupapes par cylindre.

Ils permettent une combustion en mode stratifié à faible charge et/ou une combustion dite homogène à fortes charges.

La combustion est dite stratifiée quand une zone de la chambre de combustion contient un mélange plus riche que le reste de la chambre, à faible charge. Ceci permet d'enflammer plus facilement le mélange puisque la zone enrichie se trouve globalement à proximité de la bougie.

A fortes charges, la combustion dite homogène est préconisée. Il s'agit alors d'avoir un mélange très homogène dans toute la chambre de combustion.

Actuellement, les moteurs à injection directe fonctionnent correctement soit dans un mode, soit dans l'autre. Il est généralement difficile de concilier les deux modes de fonctionnement.

Dans de tels moteurs, l'encombrement, l'accessibilité sont des paramètres importants, de même que le coût.

La présente invention concerne le type de moteurs qui vient d'être décrit et elle permet de résoudre certains des problèmes associés.

Plus précisément, la présente invention permet une réduction de la consommation de carburant, grâce à une diminution du travail de pompage. De plus, les transferts thermiques dans et autour de la chambre de combustion sont largement réduits selon la présente invention.

De façon spécifique, la présente invention concerne des moteurs à injection directe, à combustion stratifiée, ayant des cylindres de petites dimensions.

Sur de tels moteurs, l'accessibilité de l'injecteur de carburant ainsi que l'élément d'allumage doit être aisée.

Ainsi la présente invention a pour objet un moteur à combustion interne à 4 temps à allumage commandé et à injection directe comprenant au moins une chambre de combustion délimitée par un piston, un cylindre et une culasse, un conduit d'admission associé à une soupape d'admission, un conduit d'échappement avec lequel coopère une soupape d'échappement, un moyen d'allumage et un élément d'injection de carburant placé à proximité et en dessous dudit moyen d'allumage, l'élément d'injection de carburant, le moyen d'allumage et la soupape d'échappement étant disposés dans un même demi-cylindre caractérisé en ce que le conduit d'échappement présente, près de la chambre de combustion, un coude d'angle presque droit orienté vers le demi-cylindre ne contenant pas la soupape d'échappement.

Selon l'invention, la soupape d'admission est disposée dans un demi-cylindre ne contenant pas la soupape d'échappement.

Préférentiellement, Selon l'une des caractéristiques de l'invention, le conduit d'admission présente près de la chambre de combustion un axe longitudinal proche de l'axe longitudinal du cylindre.

Conformément à une autre caractéristique, la face supérieure du piston présente un profil proche de celui de la face inférieure de la culasse et ledit piston présente un évidement disposé à proximité de la région où débouche l'élément d'allumage.

Par ailleurs, l'évidement dans le piston présente une forme sphérique ou semi-sphérique.

De façon avantageuse, la face supérieure du piston présente un profil en forme de toit à double pente dont l'arête supérieure délimite les deux demi-cylindres.

En accord avec l'invention, la soupape d'admission et la soupape d'échappement sont disposées de façon diamétralement opposée.

D'autres avantages, caractéristiques et détails de l'invention apparaîtront mieux à la lecture de la description qui va suivre, faite à titre illustratif et nullement limitatif en référence aux dessins annexés sur lesquels :
- La figure 1 est une coupe longitudinale de la zone supérieure de la chambre de combustion et de la culasse; et
- La figure 2 est une perspective simplifiée d'un mode de réalisation de l'invention.

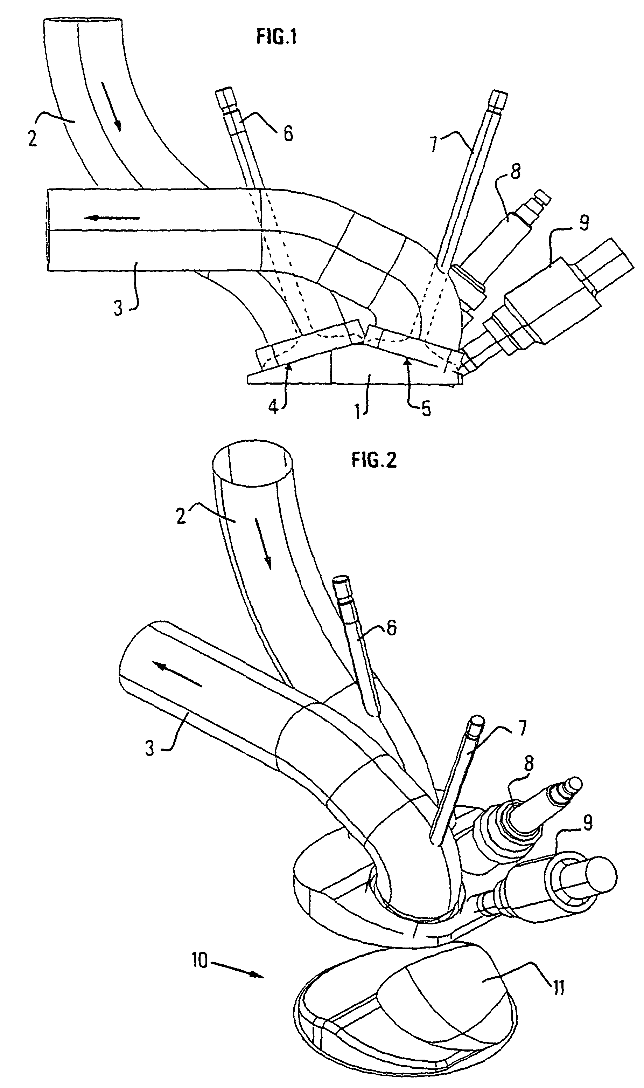

La figure 1 présente donc la zone de la culasse, en partie supérieure de la chambre de combustion 1. Un conduit d'admission 2 permet une arrivée d'air dans la chambre 1, tandis qu'un conduit d'échappement 3 permet la sortie des gaz après combustion.

Le conduit d'admission 2 débouche par un orifice d'admission 4 dans la chambre 1 et le conduit d'échappement par un orifice d'échappement 5.

Le passage des gaz à travers chaque orifice 4, 5 et conduit 2, 3 est contrôlé par un élément d'obturation tel qu'une soupape d'admission 6 côté admission et une soupape d'échappement 7 côté échappement.

Le mouvement de chaque soupape est contrôlé de façon classique, par un élément tel qu'un arbre à came (non représenté).

Par ailleurs un moyen d'allumage 8 est monté dans la culasse et débouche en partie supérieure de la chambre de combustion 1, de même qu'un moyen d'injection de carburant 9.

Selon l'invention, l'élément d'injection de carburant 9 est disposé à proximité du moyen d'allumage 8 dans le même demi-cylindre que la soupape d'échappement 7. Ce demi-cylindre est orienté vers l'avant du véhicule. Ainsi l'accès à l'injecteur 9 ainsi qu'au moyen d'allumage 8 sont aisés. De façon plus précise l'injecteur 9 est placé au dessous du moyen d'allumage 8 qui peut ainsi être au plus près du sommet de la chambre de combustion.

En outre, la soupape d'admission 6 est disposée dans le demi-cylindre ne contenant pas la soupape d'échappement 7. Les deux soupapes sont préférentiellement diamétralement opposées comme le montre la perspective de la figure 2. Ainsi un mouvement de swirl, c'est-à-dire de rotation des gaz autour de l'axe du cylindre peut être créé.

Avantageusement, la face supérieure du piston 10 présente un profil proche de celui de la face inférieure de la culasse ; le piston 10 présente en outre un évidement 11 en forme de portion de sphère, disposé en face de la zone où débouchent l'élément d'allumage 8 et l'injecteur 9. Ceci permet un meilleur confinement du carburant lors d'une injection tardive, c'est-à-dire proche du point mort haut.

Afin d'amener les gaz d'échappement vers l'arrière du véhicule tout en respectant les contraintes d'encombrement sous le capot et sans gêner l'implantation de l'injecteur par son encombrement, le conduit d'échappement 3 présente un coude d'angle presque droit, près de son débouché dans la chambre de combustion 1. Plus précisément, l'axe du conduit d'échappement 3 est d'abord proche de l'axe du cylindre puis, sur une distance de l'ordre du diamètre du cylindre, l'axe devient quasiment perpendiculaire à sa direction au départ de la chambre de combustion.

Un coude assez marqué est donc obtenu, et permet non seulement de diriger les gaz vers l'arrière du véhicule mais aussi de passer sous l'arbre à came qui peut être disposé juste au-dessus du sommet de la chambre de combustion.

Par ailleurs, le conduit d'admission 2 présente près de son arrivée dans la chambre de combustion 1 un axe proche de l'axe du cylindre ; au-delà, le conduit d'admission 2 pourra passer au-dessus de l'arbre à came et décrire ainsi une large courbe qui l'amènera finalement vers l'avant du véhicule.

La disposition particulière qui vient d'être décrite permet, avec un moteur de petite cylindrée ayant seulement deux soupapes :
- d'avoir l'injecteur 9 près de la soupape d'échappement 7 qui est généralement la plus petite soupape.
- de centrer l'injecteur 9 le plus possible vu qu'il est placé à côté de la plus petite soupape, et que le conduit d'échappement sort à l'autre extrémité.
- d'avoir une accessibilité aisée à l'injecteur 9 et au moyen d'allumage 8 puisque ceux-ci sont placés côté avant du véhicule.
- de placer un unique arbre à came au dessus du sommet de la chambre de combustion 1 grâce à la courbure particulière des conduits d'admission 2 et d'échappement 3.

L'ensemble des dispositifs évoqués ci-avant permet d'adapter à un moteur de petite cylindrée, ayant seulement deux soupapes, les avantages liés habituellement aux moteur de plus forte cylindrée ayant par exemple quatre soupapes par cylindre.

## Revendications

1. Moteur à combustion interne à 4 temps à allumage commandé et à injection directe comprenant au moins une chambre de combustion (1) délimitée par un piston (10), un cylindre et une culasse, un conduit d'admission (2) associé à une soupape d'admission (6), un conduit d'échappement (3) avec lequel coopère une soupape d'échappement (7), un moyen d'allumage (8) et un élément d'injection de carburant (9) placé à proximité et en-dessous dudit moyen d'allumage (8), l'élément d'injection de carburant (9), le moyen d'allumage (8) et la soupape d'échappement (7) étant disposés dans un même demi-cylindre, **caractérisé en ce que** le conduit d'échappement (3) présente, près de la chambre de combustion (1), un coude d'angle presque droit orienté vers le demi-cylindre ne contenant pas la soupape d'échappement (7).

2. Moteur selon la revendication 1, **caractérisé en ce que** la soupape d'admission (6) est disposée dans un demi-cylindre ne contenant pas la soupape d'échappement (7).

3. Moteur selon l'une quelconque des revendications précédentes, **caractérisé en ce que** le conduit d'admission (2) présente près de la chambre de combustion (1) un axe longitudinal proche de l'axe longitudinal du cylindre.

4. Moteur selon l'une quelconque des revendications précédentes, **caractérisé en ce que** la face supérieure du piston (10) présente un profil proche de celui de la face inférieure de la culasse et ledit piston (10) présente un évidement (11) disposé à proximité de la région où débouche l'élément d'allumage (8).

5. Moteur selon la revendication 4, **caractérisé en ce que** l'évidement (11) dans le piston (10) présente une forme sphérique ou semi-sphérique.

6. Moteur selon l'une quelconque des revendications précédentes, **caractérisé en ce que** la face supérieure du piston (10) présente un profil en forme de toit à double pente dont l'arête supérieure délimite les deux demi-cylindres.

7. Moteur selon l'une quelconque des revendications précédentes, **caractérisé en ce que** la soupape d'admission (6) et la soupape d'échappement (7) sont disposées de façon diamétralement opposée.

## Patentansprüche

1. Viertakt-Verbrennungsmotor mit gesteuerter Zündung und Direkteinspritzung, der wenigstens eine Brennkammer (1), begrenzt durch einen Kolben (10), einen Zylinder und einen Zylinderkopf, eine Einlassleitung (2), verbunden mit einem Einlassventil (6), eine Auslassleitung (3), mit welcher ein Auslassventil (7) zusammenwirkt, ein Zündmittel (8) und ein Treibstoffeinspritzmittel (9), angeordnet in der Nähe und unterhalb des Zündmittels (8), umfasst, wobei das Treibstoffeinspritzelement (9), das Zündmittel (8) und das Auslassventil (7) in einem gleichen Halbzylinder angeordnet sind, **dadurch gekennzeichnet, dass** die Auslassleitung (3) nahe der Brennkammer (1) eine nahezu rechtwinklige Biegung aufweist, die zu dem Halbzylinder hin gerichtet ist, welcher nicht das Auslassventil (7) enthält.

2. Motor nach Anspruch 1, **dadurch gekennzeichnet, dass** das Einlassventil (6) in einem Halbzylinder angeordnet ist, der nicht das Auslassventil (7) enthält.

3. Motor nach einem der vorhergehenden Ansprüche, **dadurch gekennzeichnet, dass** die Einlassleitung (2) nahe der Brennkammer (1) eine Längsachse nahe der Längsachse des Zylinders aufweist.

4. Motor nach einem der vorhergehenden Ansprüche, **dadurch gekennzeichnet, dass** die obere Seite des Kolbens (10) ein Profil nahe an jenem der Unterseite des Zylinderkopfs aufweist und der Kolben (10) eine Höhlung (11) aufweist, die in der Nähe der Region angeordnet ist, wo das Zündelement (8) mündet.

5. Motor nach Anspruch 4, **dadurch gekennzeichnet, dass** die Höhlung (11) in dem Kolben (10) eine sphärische oder halbsphärische Form aufweist.

6. Motor nach einem der vorhergehenden Ansprüche, **dadurch gekennzeichnet, dass** die Oberseite des Kolbens (10) ein Profil in Satteldachform aufweist, dessen Oberkante die beiden Halbzylinder begrenzt.

7. Motor nach einem der vorhergehenden Ansprüche, **dadurch gekennzeichnet, dass** das Einlassventil (6) und das Auslassventil (7) in diametral gegenüberstehender Weise angeordnet sind.

## Claims

1. 4-stroke internal combustion engine with spark ignition and direction injection comprising at least one combustion chamber (1) delimited by a piston (10), a cylinder and a cylinder head, an inlet passage (2) associated with an inlet valve (6), an exhaust passage (3) with which an exhaust valve (7) co-operates, a means of ignition (8) and a fuel injector (9) located close to and below said means of ignition (8), with the fuel injector (9), the means of ignition (8) and the exhaust valve (7) disposed in the same cylinder half, ***characterised in that*** near the combustion chamber (1) the exhaust passage (3) exhibits a bend almost at a right angle oriented towards the cylinder half not containing the exhaust valve (7).

2. Engine according to claim 1, ***characterised in that*** the inlet valve (6) is disposed in a cylinder half not containing the exhaust valve (7).

3. Engine according to any one of the preceding claims, ***characterised in that*** near the combustion chamber (1) the inlet passage (2) exhibits a longitudinal axis close to the longitudinal axis of the cylinder.

4. Engine according to any one of the preceding claims, ***characterised in that*** the upper face of the piston (10) exhibits a profile close to that of the lower face of the cylinder head and said piston (10) exhibits a recess (11) disposed close to the region in which the means of ignition (8) debouches.

5. Engine according to claim 4, ***characterised in that*** the recess (11) in the piston (10) exhibits a spherical or semispherical form.

6. Engine according to any one of the preceding claims, ***characterised in that*** the upper face of the piston (10) exhibits a profile in the form of a ridged roof with two slopes the upper ridge of which delimits the two cylinder halves.

7. Engine according to any one of the preceding claims, ***characterised in that*** the inlet valve (6) and the exhaust valve (7) are disposed diametrically opposite one another.
